Europäisches Patentamt

European Patent Office

Office européen des brevets

(11) Veröffentlichungsnummer: **0 264 769**
**A2**

## (12) EUROPÄISCHE PATENTANMELDUNG

(21) Anmeldenummer: **87114891.2**

(22) Anmeldetag: **13.10.87**

(51) Int. Cl.⁴: **B42D 15/02** , B32B 27/30

(30) Priorität: **18.10.86 DE 3635526**

(43) Veröffentlichungstag der Anmeldung:
**27.04.88 Patentblatt 88/17**

(84) Benannte Vertragsstaaten:
**AT BE CH DE ES FR GB GR IT LI NL SE**

(71) Anmelder: **UNILEVER NV**
**Burgemeester s'Jacobplein 1 P.O. Box 760**
**NL-3000 DK Rotterdam(NL)**

(84) **BE CH DE ES FR GR IT LI NL SE AT**

(71) Anmelder: **UNILEVER PLC**
**Unilever House Blackfriars P.O. Box 68**
**London EC4P 4BQ(GB)**

(84) **GB**

(72) Erfinder: **Vates, Heinz, Dr.**
**Schlesierstrasse 14**
**D-8510 Fürth-Stadeln(DE)**
Erfinder: **Edelberg, Rainer**
**Robert-Koch-Strasse 136**
**D-8012 Ottobrunn(DE)**

(74) Vertreter: **Hutzelmann, Gerhard et al**
**Duracher Strasse 22**
**D-8960 Kempten(DE)**

(54) **Karte.**

(57) Karte aus einem Verbund von wenigstens zwei Lagen Hart-PVC-Folie, die durch Pressen miteinander verbunden sind. In diesen Verbund ist wenigstens eine Lage bzw. Schicht aus einem flexiblen Kunststoff eingelagert.
Diese flexible Kunststofflage besteht vorzugsweise aus einem mit Acrylat-VC-Copolymeren modifizierten PVC.

Fig. 1

EP 0 264 769 A2

**Karte**

Die Erfindung betrifft eine Karte aus einem Verbund von wenigstens zwei Lagen Hart-PVC-Folie, die durch Pressen miteinander verbunden sind.

Derartige Karten sind als Identitäts-und Scheckkarten im Einsatz. Die verschiedenen Lagen sind dabei notwendig, um die Karten weitgehend fälschungssicher zu gestalten. Als sehr vorteilhaft - weil widerstandsfähig - hat sich für die einzelnen Lagen eine Hart-PVC-Folie bewährt. Werden jedoch mehrere solcher Folienlagen miteinander verpreßt, was für die Fälschungssicherheit notwendig ist, so tritt oft schon bei geringer mechanischer Beanspruchung des Verbundes und besonders bei niedrigen Temperaturen ein Bruch der gesamten Karte ein, so daß diese unbrauchbar ist.

Der Erfindung liegt die Aufgabe zugrunde, eine Karte der genannten Art zu schaffen, die zwar die guten Eigenschaften beibehält, bei der aber ein Brechen ausgeschlossen ist.

Diese Aufgabe wird erfindungsgemäß dadurch gelöst, daß in den Verbund wenigstens eine Lage bzw. Schicht eines flexiblen Kunststoffes eingelagert ist.

Überraschenderweise hat sich dabei ergeben, daß durch diese flexible Lage bzw. Schicht offensichtlich bei Fehlen der flexiblen Schicht vorhandene Spannungen innerhalb des Verbundes abgebaut werden, selbst wenn nur eine solche Lage zwischen mehr als zwei Lagen aus Hart-PVC-Folie angeordnet ist.

Als besonders günstig hat es sich jedoch ergeben, wenn erfindungsgemäß auf je eine Hart-PVC-Lage eine Lage aus flexiblem Material folgt, wobei die beiden Außenlagen des Verbundes aus Hart-PVC bestehen.

Mit einem solchen Aufbau wird ein Optimum an Festigkeit und Flexibilität der Karten erzielt, was sich für deren Lebensdauer als sehr gut erwiesen hat.

Eine besonders vorteilhafte Ausgestaltung der Erfindung liegt darin, daß das flexible Material eine Folie aus einem mit Acrylat-VC-Copolymeren modifizierten PVC ist. Hierbei wird die Steifigkeit der Karte in keiner Weise negativ beeinflußt, und trotzdem reicht die Flexibilität aus, um ein Brechen des Verbundes zu verhindern.

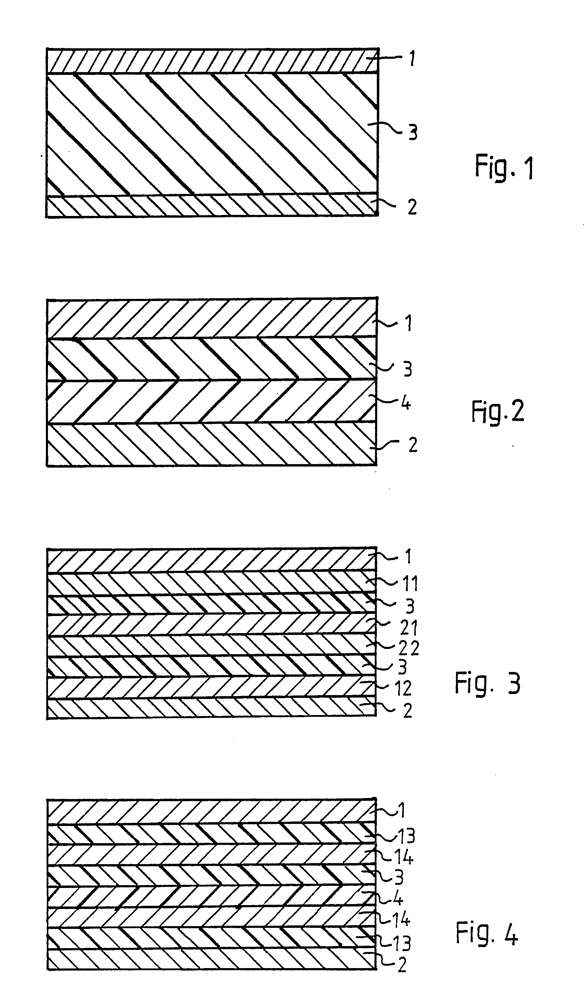

In der Zeichnung ist die Erfindung anhand von vier Ausführungsbeispielen veranschaulicht. Dabei zeigen die Figuren 1 bis 4 vier unterschiedliche Zusammensetzungen von Karten-Verbunden.

Mit 1 und 2 sind in Fig. 1 zwei Außenlagen aus Hart-PVC-Folie einer nicht weiter dargestellten Identitätskarte bezeichnet. Zwischen diesen beiden Außenlagen ist Lage 3 eingebettet, die aus einem mit Acrylat-VC-Copolymeren modifizierten PVC besteht. Die beiden Außenlagen 1 und 2 sind dabei verhältnismäßig dünn ausgebildet (etwa 80 Mikrometer), während die innere Lage 3 eine verhältnismäßig große Dicke von 600 Mikrometer aufweist.

Der in Fig. 2 dargestellte Kartenverbund hat wieder zwei Außenlagen 1 und 2 aus Hart-PVC-Folie, sowie zwei zwischen diesen angeordnete Lagen 3 und 4, die beide aus einem mit Acrylat-VC-Copolymeren modifizierten PVC bestehen, deren Acrylat-Anteile jedoch unterschiedlich sein können.

Beim Ausführungsbeispiel nach Fig. 3 sind die beiden Außenlagen 1 und 2 jeweils mit einer Lage 11 bzw. 12 verpreßt, die ebenfalls aus Hart-PVC bestehen. Nach innen anschließend ist an diese beiden Lagen je eine Lage 3 aus einem flexiblen mit Acrylat-VC-Copolymeren modifizierten PVC vorgesehen. Als innerstes in diesem Karten-Verbund sind dann zwei Lagen 21 und 22 aus Hart-PVC angeordnet.

Beim Ausführungsbeispiel nach Fig. 4 schließt an die Außenlage 1 eine flexible Lage 13 an, die als Lackfilm aufgetragen wurde. Daran anschließend ist eine Lage 14 aus Hart-PVC vorgesehen, die ihrerseits mit einer Lage 3 aus einem mit Acrylat-VC-Copolymeren modifizierten PVC in Verbindung steht. Von der anderen Außenlage 2, ebenfalls aus Hart-PVC, ist der Aufbau gleich, lediglich die innerste Lage 4 aus einem mit Acrylat-VC-Copolymeren modifizierten PVC ist in ihrem Acrylat-Anteil abweichend von der Lage 3.

**Ansprüche**

1. Karte aus einem Verbund von wenigstens zwei Lagen Hart-PVC-Folie, die durch Pressen mit einander verbunden sind, **dadurch gekennzeichnet,** daß in den Verbund wenigstens eine Lage bzw. Schicht (3,4,13) eines flexiblen Kunststoffes eingelagert ist.

2. Karte nach Anspruch 1, **dadurch gekennzeichnet,** daß auf je eine Hart-PVC-Lage (1,2,14) eine Lage 1 aus flexiblem Material folgt, wobei die beiden Außenlagen des Verbundes aus Hart-PVC bestehen.

3. Karte nach Anspruch 1 oder 2, **dadurch gekennzeichnet,** daß das flexible Material eine Folie aus einem mit Acrylat-VC-Copolymeren modifizierten PVC ist.

Fig. 1

Fig. 2

Fig. 3

Fig. 4